# FASCICULE DE BREVET EUROPEEN

(11) **EP 1 449 712 B1**
(45) Date de publication et mention de la délivrance du brevet: **17.12.2008**
(21) Numéro de dépôt: 04290425.0
(22) Date de dépôt: 17.02.2004
(51) Int. Cl.: B60N 2/30

(54) **Siège pliable pour véhicule automobile et véhicule automobile correspondant**
Klappbarer Sitz für Kraftfahrzeug und entsprechendes Frachtfahrzeug
Foldable seat for motor vehicle and corresponding motor vehicle

(30) Priorité: 20.02.2003 FR 0302100
(43) Date de publication de la demande: 25.08.2004
(73) Titulaire: Peugeot Citroën Automobiles S.A., 78140 Vélizy Villacoublay (FR)
(72) Inventeur: Gremillet, Eric, 70200 La Vergenne (FR)

(56) Documents cités:
- DE-C- 19 930 048
- US-A- 1 609 605
- US-A- 5 195 795
- US-A- 5 527 087
- US-A- 6 106 046

## Description

La présente invention concerne un siège pliable pour véhicule automobile, le siège pouvant être déplacé entre des configurations pliée et dépliée, du type comprenant :
- une assise comprenant une surface d'assise et définissant un plan d'assise à l'état déplié ainsi qu'une extrémité avant et qu'une extrémité arrière;
- un dossier qui est relié de façon mobile à l'extrémité arrière de l'assise et qui comprend une surface de dossier adaptée pour recevoir le dos d'un passager ;
- l'assise et le dossier étant chacun déplaçables entre de positions pliée et dépliée qui correspondent aux configurations pliée et dépliée du siège pliable ;
- les deux surfaces étant dirigées l'une vers l'autre lorsque le siège est dans sa configuration pliée ; et
- des moyens de déplacement de l'assise adaptés pour déplacer l'assise vers sa position pliée ou dépliée lors d'un déplacement du dossier vers sa position correspondante pliée ou dépliée.

Elle s'applique notamment aux sièges pliables de véhicules automobiles appelées habituellement « mono-space ».

On connaît du document US-B-1,609,605 qui montre les caractéristiques du préambule de la revendication 1 un siège pliable pour véhicule automobile. Ce siège peut être déplacé entre une configuration pliée et une configuration dépliée.

Le siège comprend une assise par rapport à laquelle est articulé un dossier. L'extrémité avant de l'assise est articulée par rapport au châssis du véhicule par l'intermédiaire d'une première bielle. Une seconde bielle est articulée, d'une part, à la partie supérieure du dossier, et d'autre part à un support solidaire du châssis du véhicule. Le point d'articulation de la seconde bielle au châssis est situé sensiblement au milieu de l'assise lorsque le siège est dans sa configuration dépliée.

Par ailleurs, la seconde bielle est reliée à la partie assise par l'intermédiaire d'un trou oblong qui est ménagé dans la bielle et qui coopère avec un ergot solidaire de l'assise.

Ce siège est peu confortable étant donné que la hauteur du dossier est sensiblement identique à la largeur de l'assise. En conséquence, il ne permet pas de supporter le dos d'un passager sur toute la hauteur du dos.

En outre ce siège est peu stable, étant donné que la partie arrière du siège est en porte-à-faux par rapport à la seconde bielle, lorsque le siège se trouve dans sa configuration dépliée.

L'invention a pour but de remédier à ces inconvénients, et de proposer un siège pliable pour véhicule automobile qui soit ergonomique.

Une autre but de l'invention est de proposer un siège pliable qui soit stable.

A cet effet, l'invention a pour objet un siège pliable du type précité, caractérisé en ce que les moyens de déplacement sont adaptés pour déplacer l'assise et le dossier au moins partiellement en translation vers l'avant suivant le plan d'assise lorsque le dossier est amené dans sa position dépliée.

Selon d'autres modes de réalisation de l'invention, le siège comporte l'une ou plusieurs des caractéristiques suivantes :
- le dossier est relié de façon mobile à l'assise au moyen d'une articulation autour d'un premier axe ;
- les moyens de déplacement comprennent :
   . un premier pied articulé à l'assise autour d'un deuxième axe distinct dudit premier axe, et adapté pour être articulé autour d'un troisième axe au châssis du véhicule automobile ;
   . et des moyens d'entraînement dudit premier pied qui sont adaptés pour entraîner ledit premier pied lors d'un déplacement du dossier ;
- les moyens d'entraînement comprennent une bielle articulée au dossier autour d'un quatrième axe distinct dudit premier axe, et audit premier pied autour d'un cinquième axe distinct desdits deuxième et troisième axes ;
- le plan d'assise est défini par lesdits premier et deuxième axes, et lesdits quatrième et cinquième axes sont disposés d'un côté et de l'autre de ce plan d'assise ;
- les moyens de déplacement comprennent en outre un second pied articulé au dossier autour d'un sixième axe et adapté pour être articulé au châssis du véhicule autour d'un septième axe ;
- lesdits quatrième et sixième axes s'étendent de part et d'autre du plan d'assise ;
- lorsque le siège se trouve dans ses configurations pliée et dépliée, au moins un pied se trouve de part et d'autre d'un plan vertical qui s'étend sensiblement perpendiculairement au plan d'assise et qui passe par l'axe d'articulation de ce pied au châssis du véhicule ;
- lorsque le siège se trouve dans ces configurations pliée et dépliée, ledit second pied se trouve de part et d'autre d'un plan vertical passant par ledit septième axe d'articulation ;
- le siège comprend des moyens de verrouillage du siège dans sa configuration dépliée ;
- les moyens de verrouillage comprennent une encoche et un crochet mobile entre une position de libération dans laquelle le siège est déplaçable entre ses configurations pliée et dépliée et une position de blocage dans laquelle le crochet s'étend dans l'encoche ;
- les moyens de verrouillage comprennent une surface de came qui est adaptée pour maintenir le crochet dans sa position de libération lorsque le siège se trouve en dehors de sa configuration dépliée ; et
- le siège comprend deux surfaces de butée complémentaires, adaptées pour maintenir le siège dans sa configuration dépliée.

L'invention a en outre pour objet un véhicule automobile comprenant un plancher dans lequel est ménagé un évidement de réception d'un siège pliable, et un siège pliable monté dans l'évidement, caractérisé en ce que le siège pliable est un siège tel que défini ci-dessus.

L'invention qui a pour objet un véhicule automobile est aussi caractérisé en ce que l'évidement de réception délimite une ouverture, en ce que le plancher comprend une surface plane sur la périphérie de l'ouverture en ce que le dossier du siège comprend une surface arrière plane tournée à l'opposé de la surface avant en ce que la surface arrière a une forme complémentaire de celle de l'ouverture, et en ce que la surface arrière affleure la surface du plancher lorsque le siège est dans sa configuration pliée.

L'invention sera mieux comprise à la lecture de la description qui va suivre, donnée uniquement à titre d'exemple et faite en se référant aux dessins annexés, sur lesquels :
- la Figure 1 est une vue en perspective d'un ensemble partiellement coupé d'un véhicule automobile comportant deux sièges pliables selon l'invention;
- la Figure 2 est une vue en perspective d'un siège pliable selon l'invention dans sa configuration dépliée, le garnissage étant enlevé ;
- la Figure 3 est une vue en perspective d'un siège pliable selon l'invention, le garnissage étant partiellement enlevé et le siège étant dans sa configuration pliée ;
- la Figure 4A est une vue à plus grande échelle du détail IV de la Figure 2 ;
- les Figures 4B à 4D sont des vues de différentes angles du détail de la Figure 4A, dans différents stades du dépliage du siège ;
- la Figure 5 est une vue de côté du siège selon l'invention, dans sa configuration dépliée à l'état monté et sans le garnissage; et
- la Figure 6 est une vue de côté du siège plié et du plancher de la Figure 1.

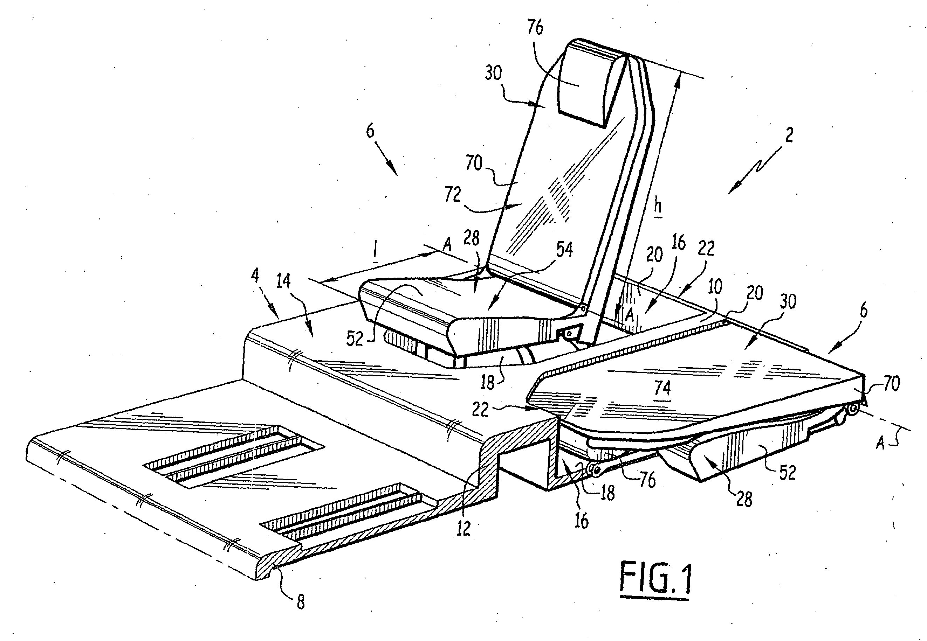

Sur la Figure 1 est représentée un ensemble d'intérieur d'un véhicule automobile, désigné par la référence générale 2.

L'ensemble 2 est destiné à être monté à l'intérieur d'une voiture, telle qu'une voiture habituellement appelée « mono-space » ou « break ». On peut concevoir également que ce siège soit utilisé dans un utilitaire.

L'ensemble 2 comprend un plancher de véhicule 4 ainsi que deux sièges 6 pliables identiques.

Le plancher 4 comprend une partie de banc arrière 8, destinée à recevoir des sièges fixes (non représentés) et une partie de coffre 10. La partie de banc arrière 8 et la partie de coffre 10 sont séparées par une partie étagée 12. La partie de coffre 10 présente une surface de coffre plane 14 en surélévation par rapport à la partie de banc arrière 8. Deux évidements 16 identiques sont ménagés dans la partie de coffre 10, dont chacun est adapté pour recevoir l'un des sièges 6 pliables.

L'évidement 16 est délimité par un fond plan 18 disposé sensiblement parallèlement à la surface de coffre 14 et sensiblement dans le plan de la partie de banc arrière 8. L'évidement 16 est en outre délimité par des parois latérales verticales 20 s'étendant entre le fond 18 et la surface de coffre 14. L'évidement 16 délimite une ouverture 22 dirigée vers le haut dans la surface de coffre 14.

Le siège 6 pliable peut être déplacé entre une configuration dépliée, dans laquelle il permet à un passager de s'asseoir (Figure 1 à gauche), et une configuration pliée, dans laquelle il s'étend entièrement dans l'évidement 16 (Figure 1 à droite). L'arrière du dossier s'intègre dans le plancher 14 de manière à former un plancher uniforme.

Les expressions « avant » et « arrière » seront utilisées par la suite par rapport à l'orientation d'un passager assis sur le siège 6 pliable.

Les expressions « supérieure » et « inférieure » seront utilisées par rapport à l'orientation habituelle du siège, dans sa configuration dépliée.

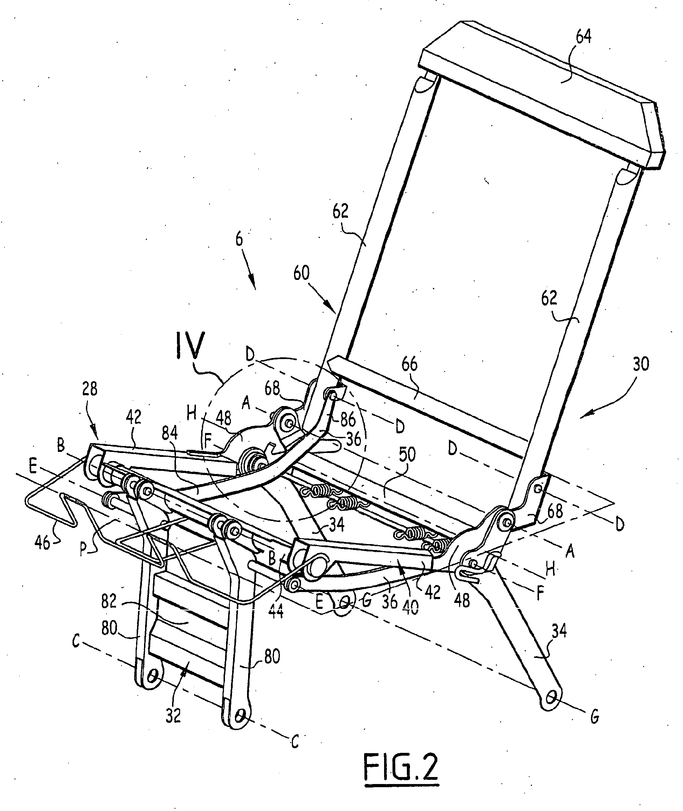

Sur la Figure 2 est représenté plus en détail le siège 6 pliable dans sa configuration dépliée, le garnissage étant enlevé.

Le siège 6 pliable comprend une assise 28, un dossier 30, un ensemble de pied avant 32, un ensemble de pieds arrière 34 et un ensemble de bielles de liaison 36.

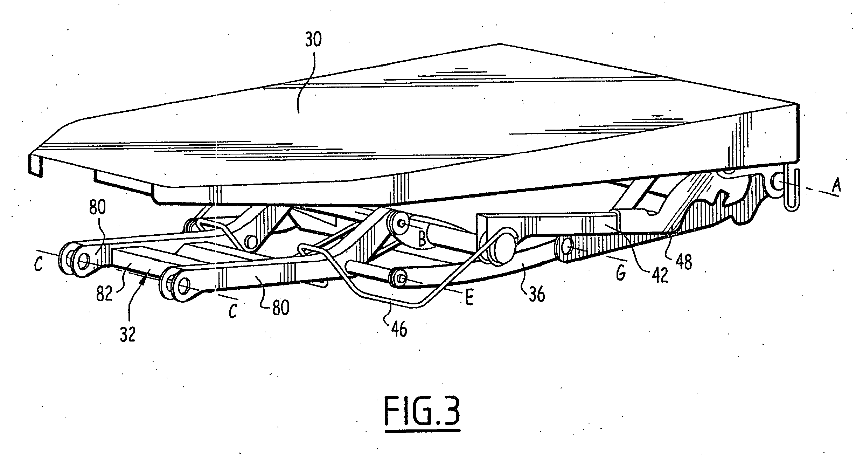

Chacun de ces éléments est mobile entre une position pliée (Figure 3) qui correspond à la configuration pliée du siège 6 et une position dépliée (Figure 2) qui correspond à la configuration dépliée du siège.

L'assise 28 comprend une armature d'assise 40 ayant des longerons latéraux 42 fixés l'un à l'autre à leur partie avant par une tige 44 de liaison transversale. L'armature 40 comprend en outre un support de garnissage 46 qui constitue une extrémité avant de l'assise 28 et qui est relié à l'extrémité avant des longerons 42.

Des brides de liaison 48, faisant partie de l'armature 40, sont reliées aux parties arrière des longerons 42. Ces brides de liaison 48 constituent une extrémité arrière de l'assise 28. Les brides de liaison 48 sont liées l'une à l'autre par une tige transversale 50 (Figure 2).

L'armature de l'assise 40 est revêtue d'un garnissage d'assise 52 délimitant une surface d'assise 54 adaptée pour supporter un passager (Figure 1).

Le dossier 30 comprend une armature de dossier 60 ayant deux montants latéraux 62 qui sont fixés les uns aux autres par deux traverses supérieure 64 et inférieure 66. Chaque montant latéral 62 se termine à son extrémité inférieure par une bride de liaison 68.

L'armature de dossier 60 est articulée à l'armature 40 de l'assise par une articulation des brides de liaison 48, 68 autour d'un premier axe A-A.

L'armature de dossier 60 est revêtue d'un garnissage de dossier 70 ayant une surface avant 72 (Figure 1) qui est adaptée pour recevoir le dos d'un passager, et une surface arrière 74 qui est sensiblement plane et qui est complémentaire de la forme de l'ouverture 22 de l'évidement 16. Le garnissage 70 comporte un appui-tête 76 à son extrémité supérieure intégré dans le plan du dossier.

En variante, l'appui-tête 76 est mobile dans une direction sensiblement verticale à l'état déplié du siège afin de s'adapter à la tête du passager.

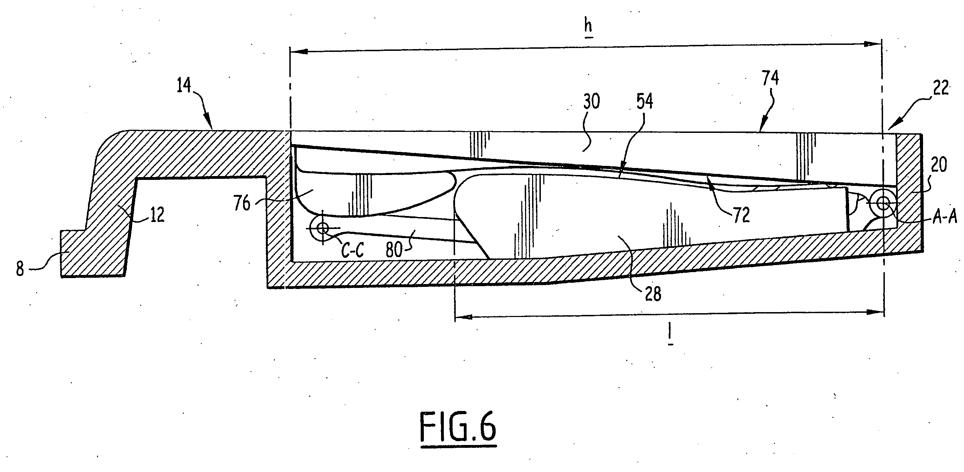

Dans la configuration pliée, la surface arrière 74 affleure la surface de coffre 14 (Figure 6) de manière à former un plancher plat et uniforme.

Le dossier 30 a une hauteur h mesurée entre le premier axe A-A et l'extrémité supérieure du garnissage de dossier 70.

L'assise 28 a une largeur 1, mesurée entre le premier axe A-A et l'extrémité avant de l'assise 28. La hauteur h du dossier est supérieure à la largeur l de l'assise. De préférence, la hauteur h du dossier 30 est supérieure à 1,25 fois la largeur l de l'assise 28.

Comme illustré sur la Figure 2, l'ensemble 32 de pieds avant comprend deux pieds avant 80, disposés parallèlement l'un à l'autre et fixés de manière rigide l'un à l'autre par une traverse 82. Les pieds avant 80 sont articulés à l'assise 28 autour d'un deuxième axe B-B, qui s'étend à l'extrémité avant des longerons latéraux 42. Chacun des pieds avant 80 est articulé au fond de l'évidement 16 autour d'un troisième axe C-C.

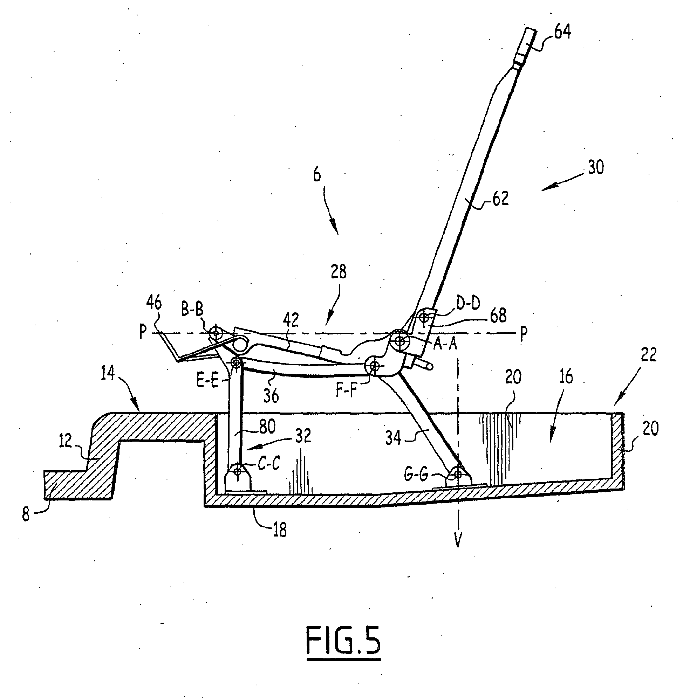

Les premier A-A et deuxième B-B axes définissent un plan d'assise P-P s'étendant sensiblement parallèlement à la surface de coffre 14 lorsque le siège 6 est dans sa configuration dépliée (Figure 5).

L'ensemble de bielles de liaison 36 est constitué de deux bielles, disposées parallèlement l'une à l'autre. Chacune des bielles 36 comprend une partie avant 84 sensiblement rectiligne, et une partie arrière 86 courbée vers le haut. Chacune des bielles de liaison 36 est articulée à l'une des brides de liaison 68 du dossier 30 autour d'un quatrième axe D-D, et à l'un des pieds avant 80 autour d'un cinquième axe E-E.

Les quatrième D-D et cinquième E-E axes se trouvent de part et d'autre du plan d'assise P-P, au moins lorsque le siège 6 est dans sa configuration dépliée.

Ainsi, les bielles de liaison 36 forment des moyens d'entraînement des pieds avant 80 dans leur position pliée ou dépliée lors d'un déplacement du dossier 30 entre ses positions pliée et dépliée.

L'ensemble de pieds arrière 34 est constitué de deux pieds arrière. Chacun des pieds arrière 34 est articulé d'une part autour d'un sixième axe F-F à l'extrémité inférieure des brides de liaison 68, et d'autre part autour d'un septième axe G-G au fond de l'évidement 16.

Le septième axe G-G définit en outre un plan vertical V-V qui passe par cet axe et qui s'étend perpendiculairement au plan d'assise P-P lorsque le siège est dans sa configuration dépliée.

Dans sa position pliée, le pied 34 s'étend d'un premier côté de ce plan vertical V-V, tandis que dans sa position dépliée, il s'étend d'un second côté de ce plan V-V, opposé au premier côté. De préférence, le second côté est situé en avant par rapport au premier côté.

Ainsi, le pied 34 est sollicité dans sa position dépliée sous l'effet du poids d'un passager.

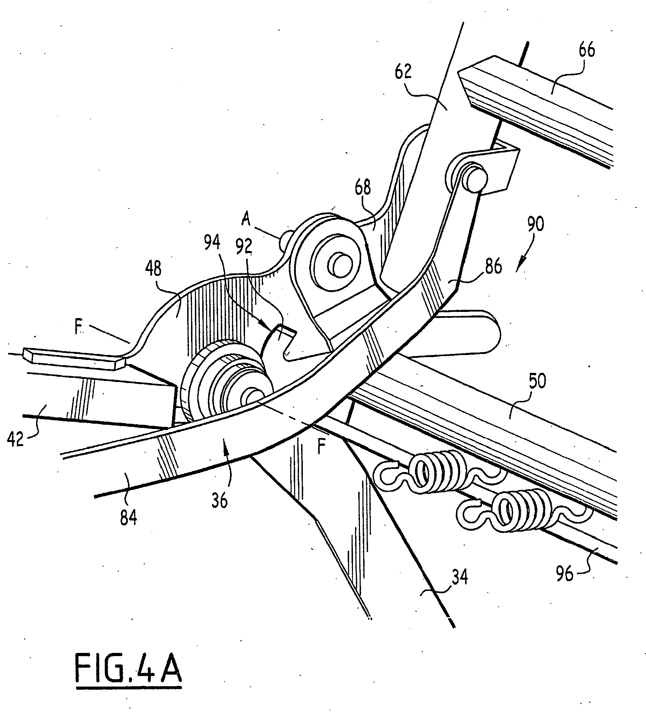

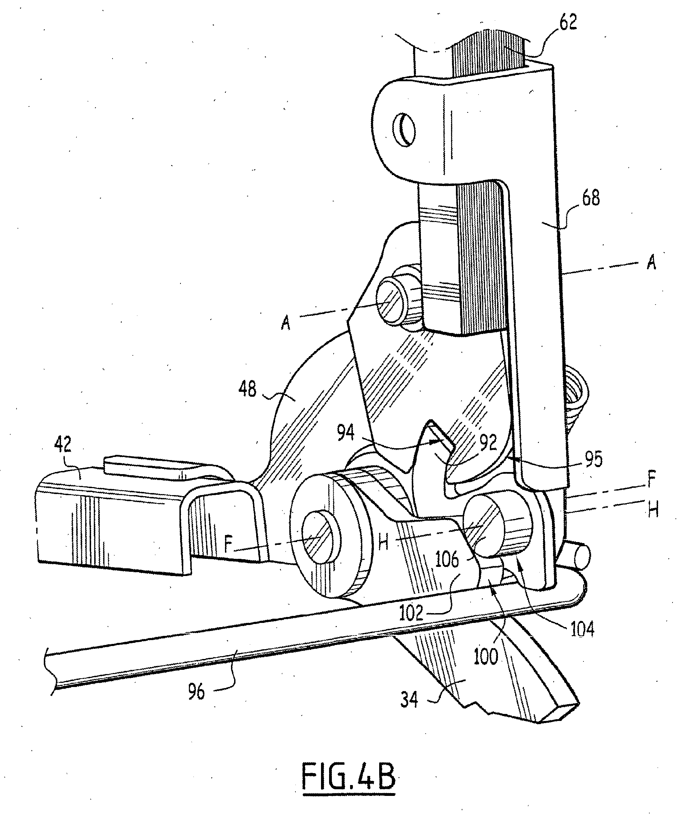

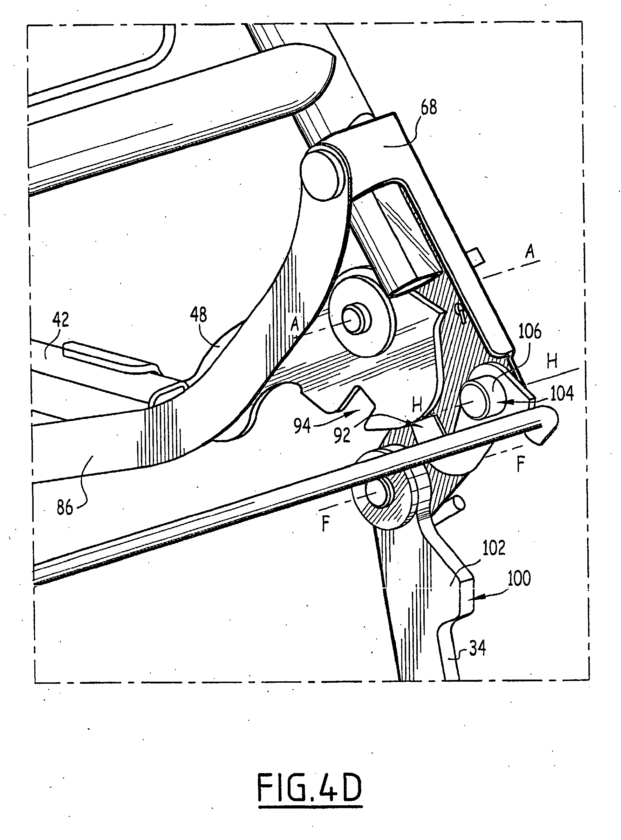

Par ailleurs, le siège 6 pliable comprend des moyens de verrouillage 90 du siège 6 dans sa configuration dépliée (voir Figures 4A à 4D). Ces moyens de verrouillage 90 comprennent un crochet 92 articulé autour d'un huitième axe H-H sur l'une des brides de liaison 68 du dossier 30, et une encoche 94 ménagée dans l'extrémité arrière de la bride de liaison 48 correspondante du longeron latéral 42 de l'assise 28. Le crochet 92 est mobile entre une position de blocage dans laquelle il s'étend dans l'encoche 94 et une position de libération dans laquelle il est en dehors de l'encoche 94. Le crochet 92 est adapté pour être amené en prise avec l'encoche 94, lorsque le siège 6 est dans sa configuration dépliée.

Les moyens de verrouillage 90 comprennent en outre une surface de came 95 disposée sur la bride de liaison 48. La surface de came 95 est adaptée pour maintenir le crochet 92 dans sa position de libération, lorsque le siège 6 est en dehors de sa configuration dépliée.

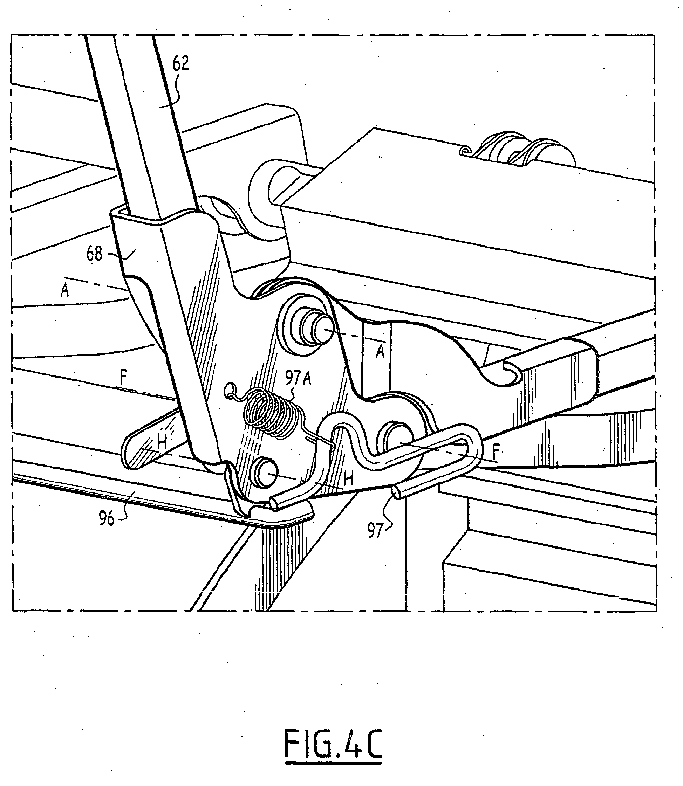

Un levier 96 qui s'étend transversalement au siège est solidaire du crochet 92 afin de l'actionner en vue d'une libération de l'encoche 94. Une poignée 97 est fixée au levier 96 des deux côtés latéraux de la siège et permet d'actionner le levier 96 (voir Figure 4C).

Le crochet 92 est sollicité vers sa position de blocage par un ressort de traction 97A qui est accroché d'une part à la poignée 97 et d'autre part à la bride 48.

Le siège comporte en outre une surface de butée concave 100 qui est délimitée par une saillie 102 disposée sur la partie supérieure des pieds 34. Le siège est muni d'une surface de butée complémentaire 104 définie par un embout cylindrique 106 solidaire du crochet 92. Lorsque le siège est dans sa configuration dépliée, les deux surfaces 100, 104 s'appliquent l'une sur l'autre et maintiennent le siège dans cette configuration.

Il est à noter que tous les axes A-A à H-H sont distincts les uns des autres, disposés parallèlement les uns aux autres et s'étendent, à l'état monté du siège, généralement parallèlement à la surface de coffre 14.

Le siège pliable fonctionne de la façon suivante.

Initialement, il se trouve dans sa configuration pliée, telle que représentée à la Figure 3.

Le dossier 30 s'étend sensiblement parallèlement à la surface de coffre 14 et obture l'ouverture 22 de l'évidement (Figure 6). L'assise 28 s'étend sensiblement parallèlement à la surface de coffre 14 et est disposée entre le fond 18 de l'évidement 16 et le dossier 30.

Les ensembles de pieds avant 32 et arrière 34 s'étendent à partir des troisième C-C et septième G-G axes vers l'arrière, également sensiblement parallèlement à la surface de coffre 14.

Dans cette position, toute la partie arrière du coffre du véhicule est disponible pour recevoir des objets devant être transportés.

Lorsqu'on souhaite transporter un passager sur l'un des sièges 6 pliables, le dossier 30 est basculé autour du premier axe A-A, en écartant le dossier 30 de la surface d'assise 54, dans le sens horaire sur la Figure 6.

Lors du basculement du dossier 30 autour du premier axe A-A, les bielles de liaison 36 se déplacent vers l'arrière par rapport à l'assise 28 et font basculer l'ensemble de pieds avant 32 autour du cinquième axe E-E dans le sens anti-horaire sur la Figure 6.

En conséquence, l'ensemble des pieds avant 32 et arrière 34 tournent autour des troisième C-C et septième G-G axes. Ainsi l'assise 28 et le dossier 30 se déplacent vers le haut et vers l'avant dans leur position dépliée.

Simultanément, lors du dépliage le crochet 92 se déplace sur la surface de came 95 et est maintenu par celle-ci dans sa position de libération. Lorsque le siège atteint sa configuration dépliée, le crochet 92 s'enclenche dans l'encoche 94. De plus, la surface de butée 104 vient s'appliquer sur la surface de butée 100.

On constate que, dans la configuration dépliée du siège, l'assise 28 et la partie inférieure du dossier 30 sont décalés horizontalement vers l'avant du siège 6, par rapport à leurs positions pliées.

Ainsi, la hauteur h du dossier 30 peut être importante, tout en garantissant un espace de rangement important disponible derrière le siège 6 lorsque celui-ci est dans sa configuration dépliée.

Le fait que les pieds arrière 34 soient articulés à l'extrémité arrière de l'assise 28 conduit à une bonne stabilité du siège.

## Revendications

1. Siège pliable pour véhicule automobile, le siège pouvant être déplacé entre des configurations pliée et dépliée, du type comprenant :
- une assise (28) comprenant une surface d'assise (54) et définissant un plan d'assise (P-P) à l'état déplié ainsi qu'une extrémité avant et qu'une extrémité arrière;
- un dossier (30) qui est relié de façon mobile à l'extrémité arrière de l'assise (28) et qui comprend une surface avant de dossier (72) adaptée pour recevoir le dos d'un passager ;
- l'assise (28) et le dossier (30) étant chacun déplaçables entre de positions pliée et dépliée qui correspondent aux configurations pliée et dépliée du siège pliable (6);
- la surface d'assise (54) et la surface avant (72) étant dirigées l'une vers l'autre lorsque le siège (6) est dans sa configuration pliée ; et
- des moyens de déplacement (32, 34, 36) de l'assise (28) adaptés pour déplacer l'assise (28) vers sa position pliée ou dépliée lors d'un déplacement du dossier (30) vers sa position correspondante pliée ou dépliée,
**caractérisé en ce que** les moyens de déplacement (32, 34, 36) sont adaptés pour déplacer l'assise (28) et le dossier (30) au moins partiellement en translation vers l'avant suivant le plan d'assise (P-P) lorsque le dossier (30) est amené dans sa position dépliée.

2. Siège pliable suivant la revendication 1, **caractérisé en ce que** le dossier (30) est relié de façon mobile à l'assise (28) au moyen d'une articulation autour d'un premier axe (A-A).

3. Siège pliable suivant la revendication 1 ou 2, **caractérisé en ce que** les moyens de déplacement comprennent :
- un premier pied (80) articulé à l'assise (28) autour d'un deuxième axe (B-B) distinct dudit premier axe (A-A), et adapté pour être articulé autour d'un troisième axe (C-C) au châssis du véhicule automobile ;
- et des moyens d'entraînement (36) dudit premier pied (80) qui sont adaptés pour entraîner ledit premier pied (80) lors d'un déplacement du dossier (30).

4. Siège pliable suivant la revendication 3, **caractérisé en ce que** les moyens d'entraînement comprennent une bielle (36) articulée au dossier (30) autour d'un quatrième axe (D-D) distinct dudit premier axe (A-A), et audit premier pied (80) autour d'un cinquième axe (E-E) distinct desdits deuxième (B-B) et troisième (C-C) axes.

5. Siège pliable suivant la revendication 4, **caractérisé en ce que** le plan d'assise (P-P) est défini par lesdits premier (A-A) et deuxième axes (B-B), et **en ce que** lesdits quatrième (D-D) et cinquième (E-E) axes sont disposés d'un côté et de l'autre de ce plan d'assise (P-P).

6. Siège pliable suivant l'une des revendications 1 à 5, **caractérisé en ce que** les moyens de déplacement comprennent en outre un second pied (34) articulé au dossier (30) autour d'un sixième axe (F-F) et adapté pour être articulé au châssis du véhicule autour d'un septième axe (G-G).

7. Siège pliable suivant les revendications 4 et 6, **caractérisé en ce que** lesdits quatrième (D-D) et sixième (F-F) axes s'étendent de part et d'autre du plan d'assise (P-P).

8. Siège pliable suivant les revendications 6 et 3 ou l'une des revendications dépendantes de la revendication 3, **caractérisé en ce que** lorsque le siège (6) se trouve dans ses configurations pliée et dépliée, au moins un pied (34) se trouve de part et d'autre d'un plan vertical (V-V) qui s'étend sensiblement perpendiculairement au plan d'assise (P-P) et qui passe par l'axe d'articulation (G-G) de ce pied au châssis du véhicule.

9. Siège pliable suivant la revendication 8, **caractérisé en ce que**, lorsque le siège (6) se trouve dans ces configurations pliée et dépliée, ledit second pied (34) se trouve de part et d'autre d'un plan vertical (V-V) passant par ledit septième axe d'articulation (G-G).

10. Siège pliable suivant l'une quelconque des revendications précédentes, **caractérisé en ce qu'**il comprend des moyens de verrouillage (90) du siège dans sa configuration dépliée.

11. Siège pliable suivant la revendication 10, **caractérisé en ce que** les moyens de verrouillage (90) comprennent une encoche (94) et un crochet (92) mobile entre une position de libération dans laquelle le siège est déplaçable entre ses configurations pliée et dépliée et une position de blocage dans laquelle le crochet (92) s'étend dans l'encoche (94).

12. Siège pliable suivant la revendication 11, **caractérisé en ce que** les moyens de verrouillage (90) comprennent une surface de came (95) qui est adaptée pour maintenir le crochet (92) dans sa position de libération lorsque le siège se trouve en dehors de sa configuration dépliée.

13. Siège pliable suivant l'une des revendications précédentes, **caractérisé en ce que** le siège comprend deux surfaces de butée complémentaires (100, 104), adaptées pour maintenir le siège dans sa configuration dépliée.

14. Véhicule automobile comprenant un plancher (4) dans lequel est ménagé un évidement de réception (16) d'un siège pliable et un siège pliable monté dans l'évidement de réception (16), **caractérisé en ce que** le siège pliable est un siège (6) selon l'une quelconque des revendications précédentes.

15. Véhicule automobile selon la revendication 14, **caractérisé en ce que** l'évidement de réception (16) délimite une ouverture (22), **en ce que** le plancher comprend une surface plane (14) sur la périphérie de l'ouverture, **en ce que** le dossier (30) du siège comprend une surface arrière plane (74) tournée à l'opposé de la surface avant (72), **en ce que** la surface arrière (74) a une forme complémentaire de celle de l'ouverture (22), et **en ce que** la surface arrière (74) affleure la surface du plancher (4) lorsque le siège est dans sa configuration pliée.

## Claims

1. Foldable seat for a motor vehicle, wherein the seat can moved between folded and unfolded configurations and is of the type comprising:
- a seat base (28) comprising a seat-base surface (54) and defining a seat-base plane (P-P) in the unfolded state and also a front end and a rear end;
- a backrest (30) which is connected moveably to the rear end of the seat base (28) and which comprises a backrest front surface (72) designed to accommodate a passenger's back;
- wherein the seat base (28) and the backrest (30) can each be moved between folded and unfolded positions which correspond to the folded and unfolded configurations of the foldable seat (6);
- wherein the seat-base surface (54) and the front surface (72) face towards one another when the seat (6) is in its folded configuration; and
- means (32, 34, 36) for moving the seat base (28), designed to move the seat base (28) into its folded or unfolded position while the backrest (30) is being moved into its corresponding folded or unfolded position,
**characterized in that** the moving means (32, 34, 36) are designed to move the seat base (28) and the backrest (30) forwards at least partially in translation along the seat-base plane (P-P) when the backrest (30) is being brought into its unfolded position.

2. Foldable seat according to Claim 1, **characterized in that** the backrest (30) is connected moveably to the seat base (28) by being hinged about a first axis (A-A).

3. Foldable seat according to Claim 1 or 2, **characterized in that** the moving means comprise:
- a first stand (80) hinged to the seat base (28) about a second axis (B-B) different from said first axis (A-A) and designed to be hinged to the chassis of the motor vehicle about a third axis (C-C);
- and drive means (36) for said first stand (80) which are designed to drive said first stand (80) while the backrest (30) is being moved.

4. Foldable seat according to Claim 3, **characterized in that** the drive means comprise a link rod (36) hinged to the backrest (30) about a fourth axis (D-D) different from said first axis (A-A) and to said first stand (80) about a fifth axis (E-E) different from said second axis (B-B) and said third axis (C-C).

5. Foldable seat according to Claim 4, **characterized in that** the seat-base plane (P-P) is delimited by said first axis (A-A) and said second axis (B-B) and **in that** said fourth axis (D-D) and said fifth axis (E-E) are located on either side of this seat-base plane (P-P).

6. Foldable seat according to one of Claims 1 to 5, **characterized in that** the moving means further comprise a second stand (34) hinged to the backrest (30) about a sixth axis (F-F) and designed to be hinged to the chassis of the vehicle about a seventh axis (G-G).

7. Foldable seat according to Claims 4 and 6, **characterized in that** said fourth axis (D-D) and said sixth axis (F-F) run on either side of the seat-base plane (P-P).

8. Foldable seat according to Claims 6 and 3 or one of the claims dependent on Claim 3, **characterized in that**, when the seat (6) is in its folded and unfolded configurations, at least one stand (34) is located on either side of a vertical plane (V-V) which runs approximately perpendicular to the seat-base plane (P-P) and which passes through the axis (G-G) hinging this stand to the chassis of the vehicle.

9. Foldable seat according to Claim 8, **characterized in that**, when the seat (6) is in its folded and unfolded configurations, said second stand (34) is located on either side of a vertical plane (V-V) passing through said seventh hinge axis (G-G).

10. Foldable seat according to any one of the preceding claims, **characterized in that** it comprises means (90) for locking the seat in its unfolded configuration.

11. Foldable seat according to Claim 10, **characterized in that** the locking means (90) comprise a notch (94) and a hook (92) which can move between a released position in which the seat can be moved between its folded and unfolded configurations and a latched position in which the hook (92) extends into the notch (94).

12. Foldable seat according to Claim 11, **characterized in that** the locking means (90) comprise a cam surface (95) which is designed to hold the hook (92) in its released position when the seat is located outside its unfolded configuration.

13. Foldable seat according to one of the preceding claims, **characterized in that** the seat comprises two complementary abutment surfaces (100, 104) designed to hold the seat in its unfolded configuration.

14. Motor vehicle comprising a floor pan (4), in which a recess (16) for receiving a foldable seat is formed, and a foldable seat fitted in the receiving recess (16), **characterized in that** the foldable seat is a seat (6) according to any one of the preceding claims.

15. Motor vehicle according to Claim 14, **characterized in that** the receiving recess (16) bounds an opening (22), **in that** the floor pan comprises a planar surface (14) on the periphery of the opening, **in that** the backrest (30) of the seat comprises a planar rear surface (74) facing away from the front surface (72), **in that** the rear surface (74) has a form complementary to that of the opening (22), and **in that** the rear surface (74) is flush with the surface of the floor pan (4) when the seat is in its folded configuration.

## Patentansprüche

1. Klappbarer Sitz für ein Kraftfahrzeug, wobei der Sitz zwischen einer eingeklappten und ausgeklappten Ausführung verschoben werden kann, umfassend:
- eine Sitzfläche (28), umfassend eine Sitzoberfläche (54) bei Definition einer Sitzebene (P-P) um ausgeklappten Zustand sowie ein vorderes Ende und ein hinteres Ende;
- eine Rückenlehne (30), die beweglich mit dem hinteren Ende der Sitzfläche (28) verbunden ist und eine vordere Fläche der Rückenlehne (72) umfasst, die dazu ausgeführt ist, den Rücken eines Fahrgastes aufzunehmen;
- wobei die Sitzfläche (28) und die Rückenlehne (30) jeweils zwischen einer eingeklappten und einer ausgeklappten Position verschiebbar sind, die den eingeklappten und ausgeklappten Ausführungen des klappbaren Sitzes (6) entsprechen;
- wobei die Sitzoberfläche (54) und die vordere Fläche (72) zueinander gerichtet sind, wenn sich der Sitz (6) in seiner eingeklappten Ausführung befindet; und
- Mittel (32, 34, 36) zum Verschieben der Sitzfläche (28), die dazu vorgesehen sind, die Sitzfläche (28) in ihre eingeklappte oder ausgeklappte Position bei einer Verschiebung der Rückenlehne (30) in ihre entsprechende eingeklappte oder ausgeklappte Position zu verschieben,
**dadurch gekennzeichnet, dass** die Verschiebemittel (32, 34, 26) dazu vorgesehen sind, die Sitzfläche (28) und die Rückenlehne (30) zumindest teilweise in Translation nach vorne entlang der Sitzebene (P-P) zu verschieben, wenn die Rückenlehne (30) in ihre ausgeklappte Position gebracht wird.

2. Klappbarer Sitz nach Anspruch 1, **dadurch gekennzeichnet, dass** die Rückenlehne (30) beweglich mit der Sitzfläche (28) mittels eines Gelenks um eine erste Achse (A-A) verbunden ist.

3. Klappbarer Sitz nach Anspruch 1 oder 2, **dadurch gekennzeichnet, dass** die Verschiebemittel umfassen:
- einen ersten Fuß (80), der an der Sitzfläche (28) um eine zweite Achse (B-B), die sich von der ersten Achse (A-A) unterscheidet angelenkt und derart ausgeführt ist, dass er um eine dritte Achse (C-C) am Karosseriegehäuse des Fahrzeugs angelenkt ist;
- und Antriebsmittel (36) des ersten Fußes (80), die dazu ausgeführt sind, den ersten Fuß (80) bei einer Verschiebung der Rückenlehne (30) anzutreiben.

4. Klappbarer Sitz nach Anspruch 3, **dadurch gekennzeichnet, dass** die Antriebsmittel eine Stange (36) umfassen, die an der Rückenlehne (30) um eine vierte Achse (D-D), die sich von der ersten Achse (A-A) unterscheidet, und an dem ersten Fuß (80) um eine fünfte Achse (E-E), die sich von der zweiten (B-B) und der dritten (C-C) Achse unterscheidet, angelenkt ist.

5. Klappbarer Sitz nach Anspruch 4, **dadurch gekennzeichnet, dass** die Sitzebene (P-P) durch die erste (A-A) und die zweite (B-B) Achse definiert ist, und dass die vierte (D-D) und die fünfte (E-E) Achse beiderseits dieser Sitzebene (P-P) angeordnet sind.

6. Klappbarer Sitz nach einem der Ansprüche 1 bis 5, **dadurch gekennzeichnet, dass** die Verschiebemittel ferner einen zweiten Fuß (34) umfassen, der an der Rücklehne (30) um eine sechste Achse (F-F) angelenkt und derart ausgeführt ist, das er am Karosseriegehäuse des Fahrzeugs um eine siebente Achse (G-G) angelenkt ist.

7. Klappbarer Sitz nach den Ansprüchen 4 und 6, **dadurch gekennzeichnet, dass** sich die vierte (D-D) und die siebente (F-F) Achse beiderseits der Sitzebene (P-P) erstrecken.

8. Klappbarer Sitz nach den Ansprüchen 3 und 6, oder einem der von Anspruch 3 abhängigen Ansprüche, **dadurch gekennzeichnet, dass**, wenn sich der Sitz (6) in seiner eingeklappten und ausgeklappten Ausführung befindet, sich mindestens ein Fuß (34) beiderseits einer Vertikalebene (V-V) befindet, die sich im Wesentlichen senkrecht auf die Sitzebene (P-P) erstreckt und durch die Gelenkachse (G-G) dieses Fußes am Karosseriegehäuse des Fahrzeugs verläuft.

9. Klappbarer Sitz nach Anspruch 8, **dadurch gekennzeichnet, dass**, wenn sich der Sitz (6) in seiner eingeklappten und ausgeklappten Ausführung befindet, sich der zweite Fuß (34) beiderseits einer Vertikalebene (V-V) befindet, die durch die siebente Gelenkachse (G-G) verläuft.

10. Klappbarer Sitz nach einem der vorhergehenden Ansprüche, **dadurch gekennzeichnet, dass** er Mittel (90) zur Verriegelung des Sitzes in seiner ausgeklappten Ausführung umfasst.

11. Klappbarer Sitz nach Anspruch 10, **dadurch gekennzeichnet, dass** die Verriegelungsmittel (90) eine Kerbe (94) und einen Haken (92) umfassen, der zwischen einer Freigabeposition, in der der Sitz zwischen seiner eingeklappten und ausgeklappten Ausführung verschiebbar ist, und einer Feststellungsposition, in der sich der Haken (92) in der Kerbe (94) erstreckt, beweglich ist.

12. Klappbarer Sitz nach Anspruch 11, **dadurch gekennzeichnet, dass** die Verriegelungsmittel (90) eine Nockenfläche (95) umfassen, die dazu ausgeführt ist, den Haken (92) in seiner Freigabeposition zu halten, wenn sich der Sitz außerhalb seiner ausgeklappten Ausführung befindet.

13. Klappbarer Sitz nach einem der vorhergehenden Ansprüche, **dadurch gekennzeichnet, dass** der Sitz zwei komplementäre Anschlagflächen (100, 104) umfasst, die dazu vorgesehen sind, den Sitz in seiner ausgeklappten Ausführung zu halten.

14. Kraftfahrzeug, umfassend einen Boden (4), in der eine Aussparung (16) zur Aufnahme eines klappbaren Sitzes vorgesehen ist, und in der Aufnahmeaussparung (16) montierter klappbarer Sitz, **dadurch gekennzeichnet, dass** der klappbare Sitz (6) ein Sitz nach einem der vorhergehenden Ansprüche ist.

15. Kraftfahrzeug nach Anspruch 14, **dadurch gekennzeichnet, dass** die Aufnahmeaussparung (16) eine Öffnung (22) begrenzt, dass der Boden eine ebene Fläche (14) an der Peripherie der Öffnung umfasst, dass die Rückenlehne (30) des Sitzes eine flache Rückseite (74) umfasst, die gegen die vordere Fläche (72) gewandt ist, dass die Rückseite (74) eine zu jener der Öffnung (22) komplementäre Form hat, und dass die Rückseite (74) auf der Oberfläche des Bodens (4) liegt, wenn sich der Sitz in seiner eingeklappten Ausführung befindet.
